# EUROPÄISCHE PATENTSCHRIFT

(11) **EP 1 870 155 B1**
(45) Veröffentlichungstag und Bekanntmachung des Hinweises auf die Patenterteilung: **04.05.2011**
(21) Anmeldenummer: 06012824.6
(22) Anmeldetag: 22.06.2006
(51) Int. Cl.: B01D 53/86, F23J 15/02

(54) **Regenerierung von NT-SCR-Katalysatoren**
Regeneration of NT-SCR catalysts
Régénération des catalyseurs du type NT-SCR

(43) Veröffentlichungstag der Anmeldung: 26.12.2007
(73) Patentinhaber: AE&E Inova AG, 8005 Zürich (CH)
(72) Erfinder: Frey, Ruedi, 8307 Effretikon (CH); Person, Sandrine, 78800 Houilles (FR)
(74) Vertreter: Schaad, Balass, Menzl & Partner AG

(56) Entgegenhaltungen:
- EP-A- 0 502 443
- EP-A- 0 505 881
- EP-A- 1 576 999
- DE-A1- 3 909 697
- DE-A1- 10 300 298

## Beschreibung

Die vorliegende Erfindung betrifft ein Verfahren zur Reinigung von Rauchgasen in Müllverbrennungsanlagen während der Regeneration eines Katalysators, der zur Reduktion von Stickoxiden dient.

In verschiedenen Industriezweigen, so zum Beispiel in Müllverbrennungsanlagen, fallen heisse Rauchgase an, die feste und gasförmige Stoffe wie Staub, Flugasche, Schwermetalle, Dioxine, Furane sowie SO₂, SO₃, NOₓ, CO und CHₓ enthalten.

Bei der thermischen Behandlung von Abfall werden die Rauchgase zur Rückgewinnung der Wärmeenergie in einem Dampfkessel auf eine Temperatur von ca. 220°C-240°C gekühlt. Vor dem Austritt in die Umgebung sind die Rauchgase unter Berücksichtigung gesetzlich festgelegter Grenzwerte von Schadstoffen zu befreien.

Historisch wurde die Reinigung der Rauchgase bewerkstelligt, in dem in einem ersten Schritt eine Entstaubung mittels Elektrostaubabscheidung oder durch Gewebefilter in Form von Schläuchen oder Taschen durchgeführt wurde. In einem zweiten Schritt erfolgte die Abtrennung der sauren Schadgase durch ein nasses oder trockenes Reinigungsverfahren. In einem letzten Schritt fand schliesslich die Entstickung statt. Um den Verbrauch der Reduktionsmittel senken zu können, wurden häufig Katalysatoren eingesetzt (SCR-Verfahren; selectivecatalytic reduction). Die Reaktion findet dabei an einem Waben- oder Platten-Katalysator statt, der innerhalb der Abgasreinigung einer Müllverbrennungsanlage häufig wie folgt geschaltet wird; a) mittels Hochtemperaturkatalysators nach einer Abgaswäsche mit Aufheizung; b) mittels eines High-dust Hochtemperaturkatalysators hinter dem Kessel oder c) mit einem Nidertemperaturkatalysator als letzte Stufe der Abgasreinigung.

Niedertemperatur-Katalysatoren, die im allgemeinen in einem Temperaturbereich unterhalb von ca. 220 bis 230°C arbeiten, weisen den Vorteil auf, dass eine Aufheizung des Rauchgases üblicherweise nicht benötigt wird. Weil sie aber im Niedertemperaturbereich arbeiten, sind sie im Gegensatz zu Hochtemperaturkatalysatoren sehr empfindlich gegen salzartige Verbindungen. Es erfolgt daher eine vorangehende Entstaubung (low-dust Schaltung) und Entfernung saurer Schadgase, um die Blockierung sowie Vergiftung aktiver Katalysatorzentren zu vermeiden. Da dieser Reinigungsschritt nur unvollständig gelingt, müssen NT-Katalysatoren regelmässig regeneriert werden.

In der DE 36 34 360 sind Katalysatorfilter beschrieben. Diese wurden entwickelt um vier Abgasreinigungs-Stufen zu einem einzigen Schritt zusammenzufügen, in dem die katalytische Filtration durch Zugabe von Adsorbens zur Dioxinminderung und von Kalkhydrat zur Trockensorption saurer Schadgase erweitert wurde. Im Filtermedium können Reaktionen auftreten, die durch aktive Zonen im Filtermatieral noch beschleunigt werden. Sie führen zur Kondensation von Ammoniumsalzen, niedrigschmelzenden Schwermetallsalzen und damit zu einem Verstopfen von Poren, was ein Versagen der Filterung durch Anstieg des Druckverlustes nach sich ziehen kann. In EP 1 072 302 wird beschrieben, wie solche Katalysatorfilter regeneriert werden können. Dabei werden die Katalysatorfilter durch gleichzeitige thermische und mechanische Behandlung regeneriert. Dazu wird mittels eines Regenerationsbrenners die Temperatur auf über 280°C, vorzugsweise 320°C erhöht und für einige Stunden gehalten. Die Eindüsung von Ammoniak wird gestoppt. Diese Katalysatorfilter müssen zwar für den Regenerationsvorgang nicht ausgebaut werden, während der Zeit der Regeneration muss jedoch die Müllbeschickung gestoppt und der Feuerraum mit Stützbrennern warmgehalten werden. Üblicherweise muss mit einem Funktionsunterbruch von ca. 3 bis 8 Stunden gerechnet werden, bis der Regenerationsprozess abgeschlossen ist.

In EP 1 576 999 wird ein Verfahren zur Reinigung von Rauchgasen beschrieben, in dem das Rauchgas filtriert, mit Ammoniak versetzt und anschliessend mit einem Katalysator zur Entstickung in Kontakt gebracht wird. Der Katalysator wird periodisch bei Temperaturen von 280 bis 450°C regeneriert, wobei die zu regenerierende Katalysatoreinheit isoliert wird. Die gereinigten Abgase werden in den Kamin abgeleitet. Dadurch können bei einer thermischen Regeneration freigesetzte Schadstoffe in die Atmosphäre gelangen.

Aufgabe der vorliegenden Erfindung war es ein einfaches Verfahren und eine Vorrichtung zur Reinigung von Rauchgasen während der Regeneration von Katalysatoren bereitzustellen, wobei die Regeneration bei fortlaufender Müllverbrennung stattfinden soll.

Die Aufgabe wird durch ein Verfahren gemäss Anspruch 1 und eine Vorrichtung gemäss Anspruch 9 gelöst. Weitere bevorzugte Ausführungsformen sind Gegenstand der abhängigen Ansprüche 2 bis 8.

Mit dem erfindungsgemässen Verfahren gelingt es, auf einfache und wirtschaftliche Weise den Katalysator zu regenerieren, ohne dass der Betrieb unterbrochen werden muss. Das nachfolgend detailliert beschriebene erfindungsgemässe Verfahren ermöglicht minimale Emissionen - es wird weder zu viel Ammoniak noch zu viel Stickoxid emittiert. Zudem ist es einfach zu programmieren und läuft dadurch vollautomatisch ab.

In der ersten Reinigungsstufe erfolgt die Abtrennung der sauren Schadgase. Diese kann nass, quasi trocken oder trocken erfolgen. Beim nassen Verfahren erfolgt die Reinigung in zwei Stufen. Zunächst passiert der Rauchgasstrom den sauren Wäscher (pH < 1), in welchem Chlorwasserstoff und Fluorwasserstoff sowie die flüchtigen Schwermetalle absorbiert werden. Bei der nachfolgenden alkalischen Waschstufe werden die sauren Schadgase wie SO₂ in einer beispielsweise durch NaOH neutralisierenden Waschlösung gebunden. Zum Einsatz kommen Füllkörperkolonnen, Venturiwäscher, Radialstromwäscher oder Bodenkolonnen.

Alternativ kann die Abtrennung der sauren Schadgase durch ein quasi trockenes Verfahren erfolgen. Dabei wird eine wässrige Lösung oder Suspension von Ca(OH)₂ und Ca(CO₃)₂ dem 200 bis 400°C heissen Rauchgas entgegengesprüht, wobei Wasser vollständig verdampft und ein festes schwermetallhaltiges Neutralsalzgemisch gebildet wird. Es wäre aber auch möglich Ca(OH)₂, das mit Wasser gepresst wurde dem heissen Rauchgas bei 200 bis 400°C entgegensprüht (sogenanntes Turbosorp-Verfahren).

Alternativ kann die Abtrennung der sauren Schadgase durch ein trockenes Verfahren erfolgen. Dabei wird das Rauchgas mit einem trockenen Additiv ausgewählt aus der Gruppe bestehend aus Calciumhydroxyd, Aktivkoks, Alkali- oder Erdalkalicarbonat und -hydrogencarbonat oder Mischungen davon in Kontakt gebracht. Besonders bevorzugt ist als trockenes Additiv Natriumbicarbonat.

Im Falle des quasi trockenen oder trockenen Verfahrens zur Entfernung der sauren Schadgase wird anschliessend an Gewebefiltern filtriert. Nach dem nassen Verfahren ist eine Filtration nicht nötig, aber möglich.

Anschliessend wird dem Rauchgas, das noch geringe Mengen an sauren Schadgasen enthält, Ammoniak zugeführt. Mit Hilfe eines Niedertemperaturkatalysators wird die Entstickung durchgeführt. Der Katalysator katalysiert vor allem die nachfolgenden Reaktionen:

| | | |
|---|---|---|
| | I | 6 NO + 4 NH₃ → 5 N₂ + 6 H₂O |
| | II | 6 NO₂ + 8 NH₃ → 7 N₂ + 12 H₂O |
| Nebenreaktion | III | SO₂ + 0.5 O₂ → SO₃ |
| Folgereaktion | IV | SO₃ + NH₃ + H₂O → NH₄HSO₄ |
| Folgereaktion | V | SO₃ + 2NH₃ + H₂O → (NH₄) ₂SO₄ |

Durch die Bildung der Ammoniumsalze als Folge der Neben- und Folgereaktionen III und IV/V, d.h. durch Reaktion der sauren Schadgase mit Ammoniak, nimmt die Aktivität des Katalysators mit der Zeit ab, was dazu führt, dass er regeneriert werden muss. Dazu wird der Katalysator langsam in kleinen Stufen erhitzt, wobei Ammoniak freigesetzt wird.

Die Aufheizrate wird dabei durch die Konzentration einer Leitgrösse ausgewählt aus der Gruppe von Stickoxiden und Ammoniak, die das gereinigte Rauchgas (d.h. nach Entfernung der sauren Schadgase und nach Entstickung) enthält, geregelt, wobei Stickoxid als Leitgrösse bevorzugt wird.

Durch das langsame Aufwärmen wird der Ammoniak ebenfalls langsam und in geringeren Mengen freigesetzt als wenn eine schnelle Erhitzung stattfindet. Dadurch kann der Ammoniak wieder zu der Reduktion der Stickoxide verwendet werden. D.h. im Gegensatz zu den herkömmlichen Verfahren, bei denen die Regeneration der Katalysatoren typischerweise zu hohen Amnoniakemissionen führt, da durch das schnelle Aufheizen der freigesetzte Ammoniak über einen kurzen Zeitraum in hoher Konzentration entweicht, kann er durch das erfindungsgemässe Verfahren sogar wieder als Reduktionsmittel verwendet werden. Dies führt dazu, dass während der Regeneration des Katalysators geringere Ammoniakmengen als während des Normalbetriebes zugegeben werden müssen. Allerdings erfolgt im Normalfall immer eine zusätzliche Zufuhr von Ammoniak. Falls die Ammoniakmengen, die bei der Regenerierung des Katalysators entstehen, nicht mehr ausreichend sind, steigt die Stickoxidkonzentration im gereinigten Rauchgas, die gemessen wird. Steigt die Konzentration dieser Leitgrösse über einen bestimmten Wert, führt dies dazu, dass wieder mehr Ammoniak in den noch nicht gereinigten Rauchgasstrom zugegeben wird. Das heisst, durch die Konzentration dieser Leitgrösse im gereinigten Rauchgas wird neben der Aufheizrate auch die Menge des zuzugebenden Ammoniaks geregelt.

Durch die Entkoppelung der Schritte der Entfernung von sauren Schadstoffen und der Entstickung werden weniger Ammoniumsalze gebildet, die sich negativ auf die Katalysatoraktivität auswirken. Da ein wirtschaftliches Verfahren zur Regenerierung des Katalysators entwickelt wurde, ist es jedoch auch nicht nötig, sicherzustellen, dass gar keine sauren Schadstoffe in Kontakt mit dem Ammoniak kommt. Es ist ausreichend, wenn ein Grossteil der sauren Schadstoffe in dem ersten Verfahrensschritt entfernt werden.

Wie erwähnt findet die Regeneration des Katalysators über einen längeren Zeitraum statt, da der Katalysator langsam aufgewärmt wird. Der Katalysator wird langsam Schrittweise über 280°C, vorzugsweise auf 300 bis 350°C, besonders bevorzugt auf 320°C aufgewärmt. Nach Erreichen dieser Temperatur wird die Temperatur gehalten. Typischerweise wird der Katalysator über einen Zeitraum von 3 bis 8, vorzugsweise 5 bis 6, Stunden aufgewärmt. Der Katalysator wird dabei bevorzugt 0.5 bis 1°C pro Minute aufgewärmt. Wie oben erwähnt wird die optimale Ausheizrate jedoch durch die Konzentration einer Leitgrösse wie Stickoxiden oder Ammoniak im gereinigten Rauchgas geregelt.

Das Aufwärmen des Katalysators kann durch einen Wärmestrahler oder ein durch Dampf oder elektrischen Strom erwärmbares Heizelement direkt oder indirekt durch gegebenenfalls aus Dampf oder Luft bestehendes heisses Schleppgas erwärmt werden. Bevorzugt wird das Schleppgas durch den Luftüberschuss eines Brenners gebildet. Besonders bevorzugt wird der Brenner direkt im Rauchgasstrom betrieben.

Die Zykluszeit zwischen zwei Regenerationszyklen wird idealerweise so angepasst, dass neben minimalen Emissionen auch ein minimaler Energieverbrauch resultiert. Der Zyklus wird so gewählt, dass auch bei den üblichen, prozessbedingten Schwankungen noch keine Beeinträchtigung der Katalysatoraktivität stattfindet, d.h. die Regeneration findet präventiv statt. Alternativ kann die Periode dem Integral der SO2-Emission im gereinigten Rauchgas, das dem Grad der Verschmutzung entspricht, angepasst werden, wobei auch dann eine Sicherheitsmarge (d.h. ein kürzerer Intervall als theoretisch nötig) gewählt wird. Selbst bei relativ hohem Einsatz des trockenen Additivs und einer Abscheidung auf ca. 5 mg/m³N SO₂ (N= 0°C/1013 mbar) ist ein Aktivitätsverlust nach 2'000 - 3'000 Betriebsstunden nicht zu verhindern, sodass die Regeneration spätestens nach 2000 Betriebsstunden erforderlich wird.

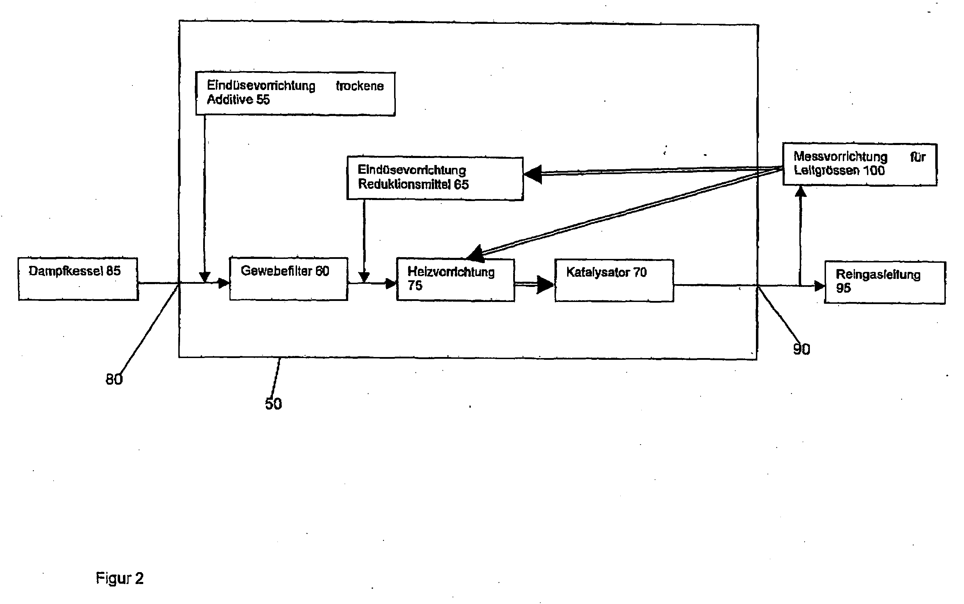

Das erfindungsgemässe Verfahren wird vorzugsweise in einer Vorrichtung durchgeführt, die dem Fachmann bekannt sind. Eine solche ist beispielsweise in EP 1 072 302 beschrieben. Im Unterschied zu den bekannten Vorrichtungen sind sie jedoch mit einem Leitsystem ausgestattet, dass die Emissionswerte des gereinigten Rauchgases ermittelt, wobei diese Emissionswerte die Aufheizrate des Katalysators und die Menge des zuzuführenden Ammoniaks regeln. In Kürze werden nachfolgend in Figur 2 die wesentlichen Teile der Vorrichtung zusammengefasst.
- Fig. 1: zeigt schematisch das erfindungsgemässe Verfahren.
- Fig. 2: zeigt schematisch die erfindungsgemässe Vorrichtung.

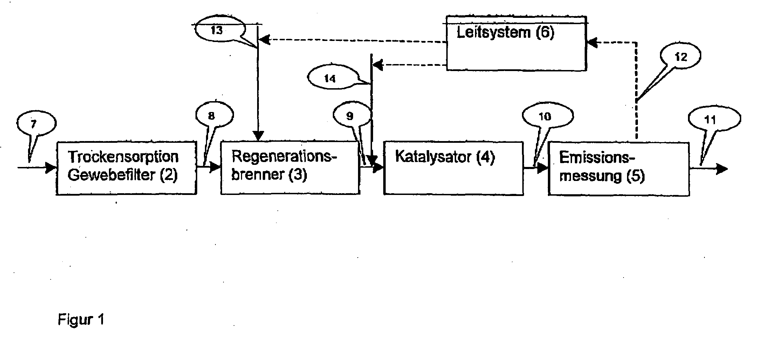

In Figur 1 wird schematisch das erfindungsgemässe Verfahren gezeigt. Die Rauchgase 7 aus einem Verbrennungsprozess, wie beispielsweise einem Müllverbrennungsprozess, werden durch Zugabe von trockenen Additiven wie z.B. Natriumbicarbonat und Aktivkoks, wobei letzteres zur Entfernung von Quecksilber- und Dioxinverunreinigungen eingesetzt wird, und anschliessende Filtration 2 an Gewebefiltern von sauren Schadgasen wie HCl, HF, SO₂ sowie Schwermetallen, Stäuben und organischen Schadstoffen wie Dioxinen/Furanen befreit.

Die Emissionsmessung 5 von HCl und SO₂ wird verwendet, um die Dosierung des trockenen Additivs zur Neutralisation (z.B. Natriumbicarbonat) zwecks Einhaltung des Emissionsgrenzwertes zu regeln; das Additiv zur Adsorption von Quecksilber und organischen Spurenstoffen (z.B. Aktivkoks) wird üblicherweise proportional zum Rauchgas-Volumenstrom dosiert.

Das für die katalytische Entstickungsreaktion benötigte Ammoniak 14 wird in Abhängigkeit bei der Emissionsmessung 5 ermittelten NOx-Emissionswertes vor dem Katalysator 4 in den Rauchgaskanal eingedüst.

Um für die katalytische Entstickungsreaktion eine optimale Temperatur zu haben, wird üblicherweise am Eintritt der Abgasreinigung 7 eine Temperatur von ca. 190°C gewählt. Mit den Wärmeverlusten kann so eine Betriebstemperatur des Katalysators von ca. 180°C sichergestellt werden. Diese Temperatur ist auch geeignet, wenn eine Trockensorption durchgeführt wird.

Die Ammoniakeindüsung 14 wird durch den NOx-Reingaswert via Leitsystem 6 geregelt. Die Feuerung wird normal mit Müll weiterbetrieben, wobei je nach Auslegung des Regenerationsbrenners 3 und der Gebläse die Last abgesenkt werden kann. Die Temperatur des Katalysators 4 wird erhöht, indem der Regenerationsbrenner 3 gestartet wird und die Gaszufuhr 14 so geregelt wird, dass die Temperatur am Austritt des Katalysators 10 mit einer Grundvorgabe von 0,5°C / min steigt.

Sobald mittels Emissionsmessung ein Signal 12 detektiert wird, das den Schwellenwert der Emissionen von NH₃ und anderen Schadstoffen überschreitet, wird die Aufheizrate reduziert:

| Emissionswert in mg/m3 N bez.11% O2 im trockenen Gas | Aufheizrate (°C / min) |
|---|---|
| NH3 ≥ 5 | 0,25 |
| NH3 ≥ 10 | 0 |
| SO2 ≥ 50 | 0 |
| HCl ≥ 10 | 0 |

Sobald der Temperaturanstieg reduziert oder gestoppt wird, wird auch die Zersetzung der Salze verlangsamt und die Emissionen sinken dadurch wieder unter den Schwellenwert. Die Aufheizung kann dann fortgesetzt werden.

Während des Temperaturanstieges im Katalysator zersetzt sich vorhandenes Ammoniumsulfat zu Ammoniak und Schwefelsäure; der Ammoniak reagiert mit dem NOx der Rauchgase; dadurch wird automatisch die Menge an frisch eingedüstem Ammoniak 14 zurückgeregelt. Wenn der Regenerationsvorgang beendet ist, benötigt der Prozess wieder dieselbe Menge an Ammoniak wie vor dem Start der Regeneration. Der Endpunkt wird so angezeigt; zur Sicherheit wird noch einige Zeit, z.B. 2 h, nachgeheizt.

In Figur 2 wird eine bevorzugte Ausführungsform einer Vorrichtung für das erfindungsgemässe Verfahren gezeigt.

Das Verfahren wird vorzugsweise in einem Gehäuse 50 durchgeführt, das eine Eindüsvorrichtung 55 für ein trockenes Additiv, einen Filter 60, der hinter der Eindüsvorrichtung 55 für das trockene Additiv angeordnet ist, eine Eindüsvorrichtung 65 für ein Reduktionsmittel und einen Katalysator 70 aufweist. Das Gehäuse 50 kann ausserdem eine Heizvorrichtung 75, wie beispielsweise einen Brenner enthalten, aber es ist auch denkbar, dass sich die Heizvorrichtung ausserhalb des Gehäuses befindet. Das Rauchgas wird dabei über eine Eintrittsöffnung 80 dem Gehäuse 50 zugeführt, wobei es vorgängig in einem Kühlkessel 85 gekühlt wurde. Im Gehäuse 50 tritt es in Kontakt mit dem trockenen Additiv, und wird nachfolgend durch den Filter, der vorzugsweise ein Gewebefilter ist von den sauren Schadgasen gereinigt. Anschliessend wird dem von den sauren Schadgasen gereinigten Rauchgas mittels der Eindüsvorrichtung 65 für das Reduktionsmittel, das vorzugsweise Ammoniak ist, das Reduktionsmittel zugegeben und mit dem Katalysator in Kontakt gebracht. Das gereinigte Rauchgas wird anschliessend über eine Austrittsöffnung 90 in die Reingasleitung 95 abgeleitet, wobei es mit einer Messvorrichtung 100 in Kontakt gebracht wird, deren ermittelte Emissionswerte, insbesondere der Stickoxid- und/oder der Ammoniakgehalt, als Leitgrössen für die Aufheizrate und für die Menge des zugeführten Ammoniaks dienen.

## Patentansprüche

1. Verfahren zur Reinigung von Rauchgasen in Müll erbrennungsanlagen während der Regeneration eine Katalysators, der zur Reduktion von Stickoxiden dient, in dem bei laufendem Müllbetrieb
a) saure Schadgase nass, quasi-trocken oder trocken vom Rauchgas entfernt werden
b) zu dem in Schritt a) gereinigten Rauchgas Ammoniak zur Reduktion von Stickoxiden zu gibt,
c) das mit dem Ammoniak versetzte Rauchgas von Schritt b) einem Katalysator zugeführt wird, wobei der Katalysator zur Regeneration mit einer geregelten Aufheizrate erhitzt wird, was zu einer Freisetzung von Ammoniak führt, wobei
die in Schritt b) zugegebene Menge Ammoniak und die Aufheizrate in Schritt c) durch die Konzentration einer Leitgrösse ausgewählt aus der Gruppe von Ammoniak und Stickoxid, die das nach Schritt c) gereinigte Rauchgas enthält, geregelt wird.

2. Verfahren gemäss Anspruch 1, in dem der Katalysator über 280°C, vorzugsweise auf 300-350°C und besonders bevorzugt auf 320°C aufgewärmt wird.

3. Verfahren nach einem der vorangehenden Ansprüche, in dem der Katalysator über einen Zeitraum von 3 bis 8, vorzugsweise 5 bis 6 Stunden aufgewärmt wird.

4. Verfahren nach einem der vorangehenden Ansprüche, in dem der Katalysator 0.5 bis 1°C pro Minute aufgewärmt wird.

5. Verfahren nach einem der vorangehenden Ansprüche in dem der Katalysator durch einen Wärmestrahler oder ein durch Dampf oder elektrischen Strom erwärmbares Heizelement direkt oder indirekt durch gegebenenfalls aus Dampf oder Luft bestehendes heisses Schleppgas erwärmt wird.

6. verfahren nach Anspruch 5, **dadurch gekennzeichnet, dass** das Schleppgas durch den Luftüberschuss eines Brenners gebildet wird.

7. Verfahren nach einem der vorangehenden Ansprüchen, in dem unter Schritt a) die sauren Schadgase durch Zugabe eines trockenen Additivs ausgewählt aus der Gruppe bestehend aus Calciumhydroxyd, Alkali- oder Erdalkalicarbonat und -hydrogencarbonat mit nachfolgender Filtration entfernt werden.

8. Verfahren nach einem der Ansprüche 1 bis 6, in dem unter Schritt a) die sauren Schadgase durch nasse Wäsche entfernt werden.

9. Vorrichtung zur Durchführung eines Verfahrens gemäss einem der Ansprüche 1 bis 8, mit einer Eindüsvorrichtung für ein trockenes Additiv (55), einem Filter (60), einer Eindüsvorrichtung für ein Reduktionsmittel (65) und einem Katalysator (70), die in einem Gehäuse (50) angeordnet sind, in das über eine Eintrittsöffnung (80) Rauchgas zuführbar ist, das nach dem Kontakt mit dem Katalysator, der mittels einer Heizvorrichtung (75) beheizbar ist, einer Reingasleitung (95) zuführbar ist, **dadurch gekennzeichnet, dass** die Reingasleitung (95) eine Messvorrichtung (100) für eine Leitgrösse aufweist ausgewählt aus der Gruppe von Ammoniak und Stickoxid, wobei die Leitgrösse die Aufheizrate des Katalysators (70) und die Menge des zuzuführenden Reduktionsmittels (65) regelt.

## Claims

1. A process for purifying flue gases in refuse incineration plants during regeneration of a catalyst which serves for reducing nitrogen oxides, in which, in running refuse operation,
a) acidic pollutant gases are removed from the flue gas in a wet, semi-dry or dry manner
b) ammonia for reducing nitrogen oxides is added to the flue gas purified in step a),
c) the flue gas from step b) which is admixed with ammonia is fed to a catalyst, with the catalyst being heated for the regeneration at a controlled heat-up rate, which leads to liberation of ammonia, with
the amount of ammonia added in step b) and the heat-up rate in step c) being controlled by the concentration of a command variable selected from the group of ammonia and nitrogen oxide which the flue gas purified according to step c) contains.

2. The process as claimed in claim 1, in which the catalyst is heated to above 280°C, preferably to 300-350°C, and particularly preferably to 320°C.

3. The process as claimed in one of the preceding claims, in which the catalyst is heated over a period of 3 to 8 hours, preferably 5 to 6 hours.

4. The process as claimed in one of the preceding claims, in which the catalyst is heated at 0.5 to 1°C per minute.

5. The process as claimed in one of the preceding claims, in which the catalyst is heated by a heat radiator or a heating element heatable by steam or electric current directly or indirectly by hot carrier gas if appropriate consisting of steam or air.

6. The process as claimed in claim 5, wherein the carrier gas is formed by the air excess of a burner.

7. The process as claimed in one of the preceding claims, in which, under step a), the acidic pollutant gases are removed by addition of a dry additive selected from the group consisting of calcium hydroxide, alkali metal carbonate or alkaline earth metal carbonate and hydrogen carbonate, with subsequent filtration.

8. The process as claimed in one of claims 1 to 6, in which, under step a), the acidic pollutant gases are removed by wet scrubbing.

9. A device for carrying out a process as claimed in one of claims 1 to 8, having an injection device for a dry additive (55), a filter (60), an injection device for a reducing agent (65) and a catalyst (70), which are arranged in a housing (50) into which flue gas can be fed via an inlet orifice (80), which flue gas, after contact with the catalyst, which is heatable by a heating device (75), can be fed to a clean gas line (95), wherein the clean gas line (95) has a measuring device (100) for a command variable selected from the group of ammonia and nitrogen oxide, wherein the command variable controls the heat-up rate of the catalyst (70) and the amount of the reducing agent (65) to be fed.

## Revendications

1. Procédé de purification des gaz de fumée dans des installations d'incinération des déchets, pendant la régénération d'un catalyseur servant à la réduction des oxydes d'azote, dans lequel, pendant le fonctionnement constant de la déchèterie,
a) les gaz nocifs acides sont éliminés du gaz de fumée sous forme humide, pratiquement sèche ou sèche,
b) on ajoute au gaz de fumée purifié à l'étape a) de l'ammoniac en vue de la réduction des oxydes d'azote,
c) le gaz de fumée additionné d'ammoniac est acheminé de l'étape b) à un catalyseur, le catalyseur étant chauffé à un taux de chauffage régulé en vue de la régénération, ce qui conduit à une libération d'ammoniac,
la quantité d'ammoniac ajoutée à l'étape b) et le taux de chauffage de l'étape c) étant régulés par la concentration d'une valeur directive choisie parmi le groupe de l'ammoniac et de l'oxyde d'azote, que le gaz de fumée purifié après l'étape c) contient.

2. Procédé selon la revendication 1, dans lequel le catalyseur est chauffé au-dessus de 280°C, de préférence à 300-350°C, et particulièrement préférablement à 320°C.

3. Procédé selon l'une quelconque des revendications précédentes, dans lequel le catalyseur est chauffé pendant un intervalle de temps de 3 à 8 heures, de préférence de 5 à 6 heures.

4. Procédé selon l'une quelconque des revendications précédentes, dans lequel le catalyseur est chauffé à raison de 0,5 à 1°C par minute.

5. Procédé selon l'une quelconque des revendications précédentes, dans lequel le catalyseur est chauffé par un radiateur chauffant ou un élément chauffant pouvant être chauffé par de la vapeur ou un courant électrique, directement ou indirectement par un gaz d'entraînement chaud éventuellement constitué de vapeur ou d'air.

6. Procédé selon la revendication 5, **caractérisé en ce que** le gaz d'entraînement est formé par l'excès d'air d'un brûleur.

7. Procédé selon l'une quelconque des revendications précédentes, dans lequel, à l'étape a), les gaz nocifs acides sont éliminés par ajout d'un additif sec choisi parmi le groupe comprenant de l'hydroxyde de calcium, un carbonate et un hydrogénocarbonate alcalin ou alcalino-terreux, avec filtration subséquente.

8. Procédé selon l'une quelconque des revendications 1 à 6, dans lequel, à l'étape a), les gaz nocifs acides sont éliminés par lavage humide.

9. Dispositif pour mettre en oeuvre un procédé selon l'une quelconque des revendications 1 à 8, comprenant un dispositif d'injection pour un additif sec (55), un filtre (60), un dispositif d'injection pour un agent de réduction (65) et un catalyseur (70), qui sont disposés dans un boîtier (50), dans lequel du gaz de fumée peut être introduit par le biais d'une ouverture d'entrée (80), le gaz de fumée pouvant être acheminé à une conduite de gaz pur (95) après son contact avec le catalyseur, qui peut être chauffé par le biais d'un dispositif chauffant, **caractérisé en ce que** la conduite de gaz pur (95) présente un dispositif de mesure (100) pour une valeur directive choisie parmi le groupe de l'ammoniac et de l'oxyde d'azote, la valeur directive régulant le taux de chauffage du catalyseur (70) et la quantité de l'agent de réduction (65) à ajouter.
